# EUROPEAN PATENT SPECIFICATION

(11) **EP 3 575 853 B1**
(45) Date of publication and mention of the grant of the patent: **25.12.2024**
(21) Application number: 17893968.2
(22) Date of filing: 28.03.2017
(51) Int. Cl.: B29C 45/00, G03B 35/18, G02B 5/08, G02B 30/35, G02B 30/56

(54) **PRODUCTION METHOD FOR STEREOSCOPIC-IMAGE-FORMING DEVICE, AND STEREOSCOPIC-IMAGE-FORMING DEVICE**
VERFAHREN ZUR HERSTELLUNG EINER STEREOSKOPISCHEN BILDERZEUGUNGSVORRICHTUNG UND STEREOSKOPISCHE BILDERZEUGUNGSVORRICHTUNG
PROCÉDÉ DE FABRICATION DE DISPOSITIF DE FORMATION D'IMAGE STÉRÉOSCOPIQUE, ET DISPOSITIF DE FORMATION D'IMAGE STÉRÉOSCOPIQUE

(30) Priority: 27.01.2017 JP 2017013351; 16.02.2017 WO PCT/JP2017/005727
(43) Date of publication of application: 04.12.2019
(73) Proprietor: Asukanet Company, Ltd., Hiroshima-shi, Hiroshima 731-0138 (JP)
(72) Inventor: OTSUBO, Makoto, Hiroshima-shi Hiroshima 731-0138 (JP)
(74) Representative: Vossius & Partner Patentanwälte Rechtsanwälte mbB
(86) International application number: PCT/JP2017/012622
(87) International publication number: WO 2018/138940

(56) References cited:
- WO-A1-2009/131128
- WO-A1-2009/131128
- JP-A- 2012 247 459
- JP-A- 2015 114 622
- JP-A- 2015 125 393
- JP-B1- 5 820 955
- US-A1- 2007 097 019
- US-A1- 2011 002 038

## Description

### Technical Field

The present invention is related to a production method for a stereoscopic-image-forming device and a stereoscopic-image-forming device where first and second light control panels (parallel light-reflective panels) each having band-like light-reflective surfaces (mirror surfaces) aligned in parallel, are overlapped each other such that the respective light-reflective surfaces of the first and second light control panels are crossed in a plan view.

### Background Art

As a device that forms stereoscopic images using light (scattering light) emitted from the surface of an object, e.g., there is a stereoscopic-image-forming device (an optical-image-forming device) set forth in Patent Literature 1.

The image-forming device of Patent Literature 1 includes first and second light control panels formed by aligning with a constant pitch a large number of band-like light-reflective surfaces made of metal reflective surfaces inside of two transparent flat plates. The band-like light-reflective surfaces are vertically aligned over the thickness direction of each of the transparent flat plates. The image-forming device is configured by bonding together the first and second light control panels with respective one surface sides of the first and second light control panels facing each other such that the respective light-reflective surfaces of the first and second light control panels are orthogonally crossed.

### Citation List

### Patent Literature

| | |
|---|---|
| Patent Literature 1: | WO 2009/131128 |
| Patent Literature 2: | WO 2015/033645 |
| Patent Literature 3: | JP 2015-114622 A |
| Patent Literature 4: | JP 2015-125393 A |
| Patent Literature 5: | US 2007/0097019 A1 |

### Summary of Invention

### Technical Problem

When producing the above-mentioned first and second light control panels, a large number of plate-shaped transparent synthetic resin plates or glass plates (hereinafter, referred also as to "transparent plates") having a same constant thickness and each having a metal reflective surface formed on one surface side are laminated in a manner where the metal reflective surfaces are disposed in one side to produce a laminated body, and then the first and second light control panels are cut out from the laminated body such that cut planes become perpendicular to the metal reflective surfaces.

As a result, a large deposition furnace is necessary when working on forming the metal reflective surfaces on the transparent plates. Besides, forming the metal reflective surfaces requires to repeat over 100 times a series of operations: putting one or a small numbers of transparent plate(s) in the deposition furnace; executing deposition after deaerating the furnace to have a high vacuum state; opening to atmospheric pressure and taking the deposited transparent plate(s) out from the furnace, and it is an extremely burdensome and time-consuming work. Additionally, it is poor in workability and manufacturing efficiency because this requires forming the laminated body by laminating the metal deposited transparent plates, cutting out the first and second light control panels from the laminated body by cutting the laminated body into an extremely thin predetermined thickness, and also doing other operations such as polishing the cut planes (in both sides) of the first and second light control panels, or else.

To cope with this, a method as disclosed in Patent Literature 2 is suggested. In the method, two light control panels each including a concave-convex plate material, on one surface side of which quadrilateral-cross-section grooves are formed by parallel banks and on opposing lateral surfaces of the grooves light-reflective parts are formed, are prepared, and then the two light control panels are made to face to each other such that the respective light-reflective parts thereof are orthogonally crossed or crossed.

However, there is a problem that demolding becomes extremely difficult if the height of the banks of the concave-convex plate material is high (that is, the depth of the grooves is deep) when the concave-convex plate material is formed by injection-molding. Furthermore, forming mirror surfaces on the lateral surfaces of the parallel grooves is difficult even by using technology of Patent Literature 2, and thus, there is a problem that irregularity in the shape of the products frequently occurs.

Patent Literature 3 discloses a manufacturing method of light control panels used for an optical imaging device, including: a first step of forming on one side of a transparent plate material a large number of parallel grooves each having opposed parallel lateral faces and flat bottom face by making the transparent plate material go through between a groove roller with a large number of parallel grooves formed in the circumferential direction and a flat roller with a flat surface; a second step of forming light reflective portions by conducting a mirror surface treatment that forms light reflective surfaces only on the opposite lateral faces of the parallel grooves; and a third step of preparing two transparent plate materials each having the parallel grooves formed on its one side and overlapping the two transparent plate materials in a manner where the parallel grooves of one of the two transparent plate materials and the parallel grooves of the other one of the two transparent plate materials are orthogonally crossed.

In the stereoscopic-image-forming device of Patent Literature 4, the first and second light control portions are formed respectively on one side and the other side of a transparent plate material, the first light control portion includes band-like light reflective surfaces standing upright and arranged in parallel, the second light control portion includes band-like light reflective surfaces standing upright and arranged in parallel, and the band-like light reflective surfaces of the first light control portion and the band-like light reflective surfaces of the second light control portion are so disposed as to be orthogonally crossed in a plan view. The first and second light control portions are produced by a method where the first light control portion is formed on the one side of the transparent plate material and after that the second light control portion is formed on the other side.

Patent Literature 5 discloses an improved multi-depth display apparatus and a method for displaying images at at least two different perceived depths, using a single display. The multi-depth display apparatus comprises a display panel comprising a plurality of pixels arranged to display at least a first image and a second image; and a direction changing layer arranged so that light forming said first and second images enters the direction changing layer and then exits the direction changing layer.

The present invention has been made in consideration of the above circumstances, and has as its object to provide a production method for a stereoscopic-image-forming device and a stereoscopic-image-forming device using the production method, which is capable of easily producing the first and second light control panels and the stereoscopic-image-forming device body formed by integrating the first and second light control panels, and of obtaining clearer stereoscopic images.

### Solution to Problem

The invention for which protection is sought is defined by the claims.

A production method for a stereoscopic-image-forming device according to the claimed invention comprises:
a first step of producing a molded preform made from a transparent resin by injection-molding, the molded preform including triangle-cross-section first and second grooves formed respectively on both sides (i.e. one side and the other side) of a transparent plate material, the molded preform including triangle-cross-section first and second protruded strips formed respectively on the both sides of the transparent plate material, the first and second grooves each having a vertical surface and an inclined surface, the first protruded strips being formed by the first grooves next to each other, the second protruded strips being formed by the second grooves next to each other, the first and second grooves formed respectively on the both sides of the transparent plate material being arranged so as to be orthogonally crossed in a plan view;
   and
a second step of selectively forming mirror surfaces on the vertical surfaces of the first and second grooves provided on the both sides of the molded preform, and thereby a stereoscopic-image-forming device body is produced.

According to the claimed invention, in the second step the mirror surfaces are formed by sputtering, metal deposition, metal microparticle spraying, or ion beam irradiation toward the vertical surfaces from a direction along the inclined surfaces in a manner where the inclined surfaces become in shadow. This makes it possible to prevent to the utmost the mirror surfaces from being formed on the inclined surfaces of the grooves, thereby the mirror surfaces can be selectively formed on the vertical surfaces of the grooves.

According to an embodiment of the claimed invention, the inclined surfaces may be flat surfaces. This makes it possible to further prevent the mirror surfaces from being formed on the inclined surfaces of the grooves, thereby the mirror surfaces can be selectively formed on the vertical surfaces of the grooves.

According to another embodiment, it is preferable that an annealing treatment for removing residual stress be applied to the molded preform after being formed. This makes it possible to produce a stereoscopic-image-forming device with less deformation.

### Advantageous Effects of Invention

A production method for a stereoscopic-image-forming device and a stereoscopic-image-forming device according to the present application use a molded preform produced by any one of press-molding, injection-molding, and roll-molding. A large number of grooves formed in parallel each have an inclined surface and a vertical surface. Each of the grooves becomes wider toward the opening, and thus, molding and demolding become easier. Therefore, a stereoscopic-image-forming device, which aspect ratio defined by (the height of the groove) / (the width of the groove) is relatively high, can be produced at a relatively low cost.

Here, a metal coating can be selectively formed on each of the vertical surfaces by sputtering, metal deposition, metal microparticle spraying, or ion beam irradiation.

Furthermore, by making the inclined surfaces be flat surfaces, or more effectively, concave surfaces recessed inward, mirror surfaces can be prevented to the utmost from being formed on the inclined surfaces of the grooves.

### Brief Description of Drawings

Figs. 1A and 1B are respectively a sectional front view and a sectional side view of a stereoscopic-image-forming device.
Figs. 2A and 2B are respectively a sectional front view and a sectional side view of the same stereoscopic-image-forming device.
Fig. 3A is a partially-enlarged side view of a molded preform of the same stereoscopic-image-forming device. Figs. 3B and 3C are partially-enlarged side views of one of the protruded strips of a molded preform according to modifications that are not according to the claimed invention, respectively.
Figs. 4A to 4D are explanative diagrams of a production method, which is not in accordance with the claimed invention, for the same stereoscopic-image-forming device.
Fig. 5A and 5B are explanative diagrams of a stereoscopic-image-device and a production method for the same according to the present invention.
Fig. 6 is a plan view of a stereoscopic-image-forming device.

### Description of Embodiments and illustrative examples

Subsequently, a description of a stereoscopic-image-forming device and a production method for the same follows with reference to the accompanying drawings.

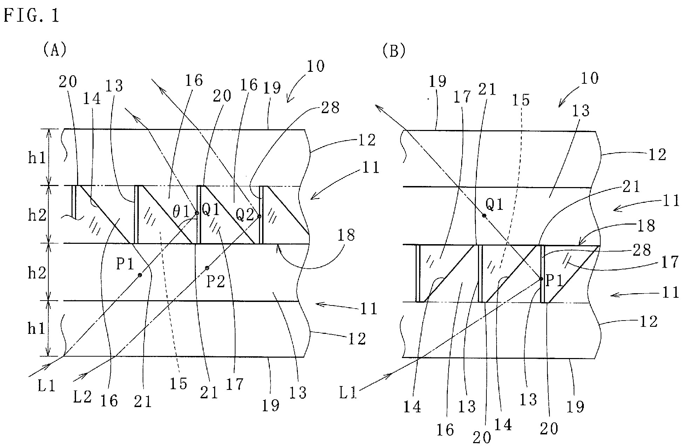

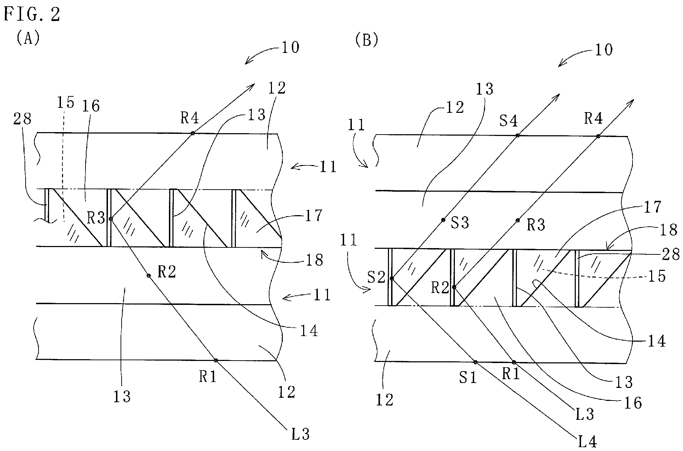

As shown in Figs. 1A, 1B, 2A, and 2B, a stereoscopic-image-forming device 10 includes a top-bottom pair of first and second light control panels (parallel light-reflective panels) 11. Note that since the first and second light control panels 11 have a same configuration, they have same reference signs assigned.

As shown in Figs. 1A, 1B, 2A, and 2B, the first and second light control panels 11 each include a transparent plate material 12, and the transparent plate material 12 has on its one side (front side) (i.e. the bottom for the first light control panel 11, the top for the second light control panel 11) triangle-cross-section grooves 15 and triangle-cross-section protruded strips 16 formed between the grooves 15. The grooves 15 each have a vertical light-reflective surface 13 (a mirror surface) and an inclined surface (a non-light-reflective surface, and preferably a light transmitting surface) 14. The grooves 15 and the protruded strips 16 of the first and second light control panels 11 are respectively provided in large numbers and in parallel with a constant pitch. Accordingly, the first and second light control panels 11 each have a group of band-like light-reflective surfaces standing upright and spaced in parallel.

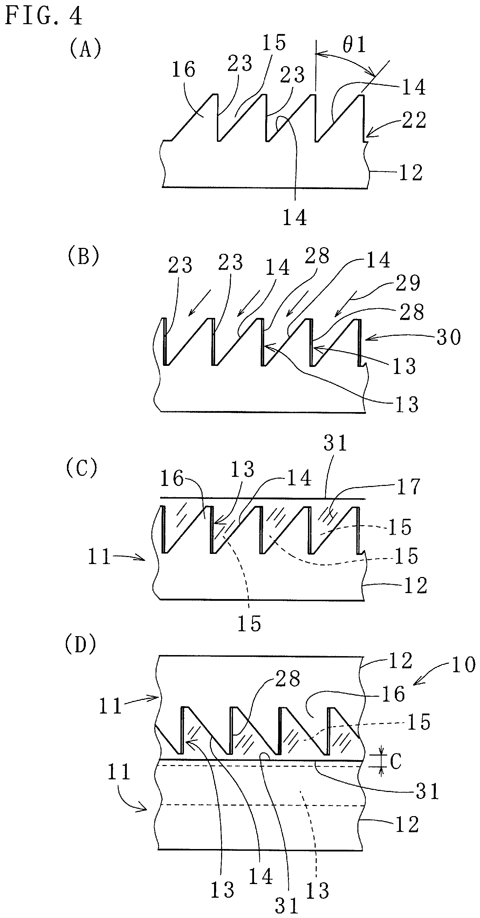

A transparent resin 17 is filled up into the grooves 15, and a filled surface 18 is parallel to a back side surface 19 of the first and second light control panels 11 (e.g. transparent plate materials 12), respectively. The first and second light control panels 11 are disposed with a front side surfaces 31 of the first and second light control panels 11 (refer to Figs 4A to 4D) being abutted on or proximate to each other in a manner where the light-reflective surfaces 13 of the first and second light control panels 11 are orthogonally crossed (or, e.g., crossed within a range of 85 to 95 degrees, more preferably 88 to 92 degrees) in a plan view. The first and second light control panels 11 are bonded together via e.g. a transparent adhesive agent (resin) and integrated.

It is preferable that the transparent resin constituting the shape of the first and second light control panels 11 and the transparent resin 17 filled up into the grooves 15 be the same resin; however, they may be different kinds of transparent resins. In a case of using different kinds of transparent resins, it is preferable that their refractive indexes (η) be identical or approximate. In other words, in a case of using different transparent resins, it is preferable that a transparent resin which refractive index (η2) is identical or nearly equal to the refractive index (η1) of the transparent resin constituting the shape of the first and second light control panels 11 (transparent plate materials 12) according to the claimed invention, η2 is within a range of (0.95 to 1.05)×η1) be used as the transparent resin filled up into the grooves (It is also the case in embodiments below).

Incidentally, regarding the first and second light control panels 11 in Figs. 1A and 1B, h2/h1 is e.g. preferably 0.5 to 5. Here, on a definition that h1 is the thickness of the transparent plate material 12 and h2 is the height of the protruded strips 16 (i.e. the vertical light-reflective surfaces 13), it is practical that (h1+h2) is within a range of 0.5 to 5 mm, and h1 is e.g. equal to or more than 0.03 mm; however, the present invention is not limited to the mentioned numerical values. According to the claimed invention, an angle θ1 between the vertical light-reflective surface 13 and the inclined surface 14 is within a range of 15 to 60 degrees; however, in examples not according to the claimed invention, the angle Θ1 may be changed depending on the values of h1 and h2. Additionally, it is preferable that the aspect ratio (h2/w), that is, a ratio between the width (pitch) w of the groove 15 and the height h2 of the vertical light-reflective surface 13 be approximately 0.85 to 5 (more preferably, 2 to 3.5), and this makes it possible to obtain higher vertical light-reflective surfaces 13.

At each of the corner portions (bottom portions) of the triangle-cross-section grooves 15 that forms an acute angle, a micro flat portion 20 is provided, and at each of the corner portions (top portions) of the triangle-cross-section protruded strips 16 that forms an acute angle, a micro flat portion 21 is provided. The each width of the micro flat portions 20, 21 is preferably 0.02 to 0.2 times the bottom width (w) of the triangle-cross-section grooves 15 and the triangle-cross-section protruded strips 16. Incidentally, the widths of the micro flat portions 20, 21 may be identical or different. By providing the micro flat portions 20, 21, the products become resistant to flaws, and besides, the accuracy of the products increases. Note that since the widths of the micro flat portions 20, 21 are narrow, it is explained, with the micro flat portions 20, 21 left out of account, presuming that the cross-section of each of the grooves 15 and protruded strips 16 is a triangle (It is also the case in embodiments below).

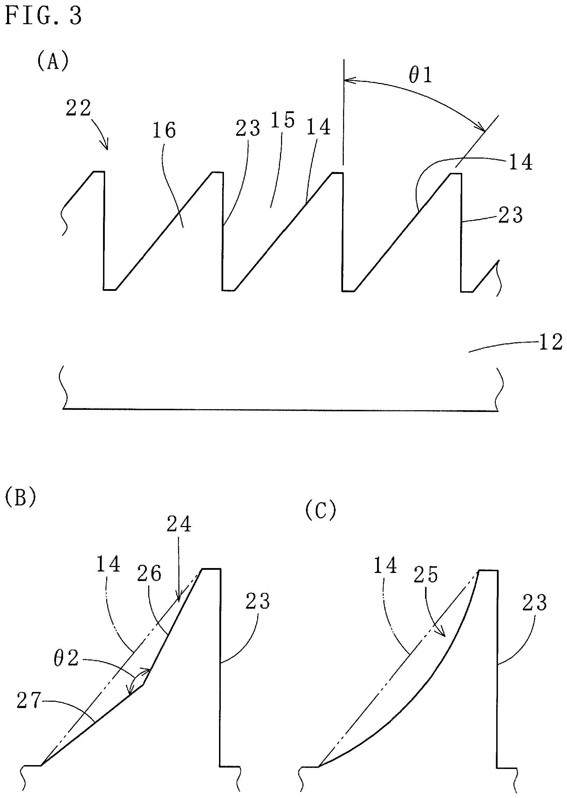

The vertical light-reflective surfaces 13 are formed by selectively performing a mirror surface treatment (mirror-finishing treatment) to vertical surfaces 23 of a molded preform 22 made from a transparent resin (described below) (refer to Fig. 3A). The mirror surface treatment is usually selectively performed by metal deposition, sputtering, metal microparticle spraying, or ion beam irradiation (hereinafter, may be referred to as "sputtering or other methods"). The inclined surfaces 14 remain as they are as a part of the molded preform 22 that is transparent, and each have a well-light-transmissible homogeneous flat surface as shown in Fig. 3A.

Although the inclined surfaces 14 are flat surfaces as described above, the inclined surfaces 14 includes cases even where the cross-section is a concave surface recessed inward 24, 25, and the cross-section is a concave surface making use of a part of a polygon as shown in Figs. 3B and 3C, not in accordance with the claimed invention. A surface which cross-section is a straight line or inside the straight line, and having a constant downward gradient from the top portion of the protruded strip to the bottom portion of the groove, is treated as an inclined surface (It is also the case in embodiments below).

The concave surface 24 shown in Fig. 3B is configured by two flat surfaces 26, 27 in a manner where an angle θ2 formed by the flat surfaces 26, 27 becomes less than 180 degrees (e.g. 120 to 175 degrees, preferably the lower limit is 150 degrees and the upper limit is 170 degrees) . Here, although the concave surface 24 is configured by the two flat surfaces 26, 27, the concave surface may be configured by three or more of flat surfaces. In this case, angles formed by the flat surfaces next to each other may be identical or different.

The concave surface 25 shown in Fig. 3C is configured by a curved surface which cross-section is bent or in a state of a circular arc.

Note that the concave surface is not limited to the above-mentioned shapes, but may be configured by combining a flat surface and a curved surface.

As a result, by performing sputtering or other methods to the vertical surfaces 23 along the inclined surfaces 14 with an angle equal to or beyond the cross-section inclination angle Θ1 of the flat inclined surface 14 (e.g. 1 to 10 degrees) shown in Fig. 3A, forming mirror surfaces on the concave surfaces 24 or 25 can be avoided. Accordingly, the recessed amount of the concave surfaces 24, 25 to the inclined surfaces 14 may variously changed depending on conditions of the sputtering or other methods.

By forming the vertical light-reflective surfaces 13 as explained above, in Figs. 1A and 1B, lights L1 and L2 from an object obliquely entering from lower left side of the stereoscopic-image-forming device 10 respectively reflect at P1 and P2 of the lower vertical light-reflective surface 13, further reflect at Q1 and Q2 of the upper vertical light-reflective surface 13, and form a stereoscopic image in space on one side (the top side) of the stereoscopic-image-forming device 10. Note that, front sides (left sides in Figs. 1A and 1B) of metal reflective films (metal coatings) 28 formed on the vertical surfaces 23 by the mirror surface treatment are used as the vertical light-reflective surfaces 13 of the first and second light control panels 11; however, as shown in Figs. 2A and 2B, back sides (right sides in Figs. 2A and 2B) of the metal reflective films 28 may be used as the vertical light-reflective surfaces 13.

In other words, as shown in Figs. 2A and 2B, lights L3 and L4 from an object obliquely entering from lower right side of the stereoscopic-image-forming device 10 respectively enter into the lower transparent plate material 12 at R1 and S1, reflect at R2 and S2 of the lower vertical light-reflective surface 13, further reflect at R3 and S3 on the upper vertical light-reflective surface 13, exit from R4 and S4 of the upper transparent plate material 12, and form a stereoscopic image in space on the top side (one side) of the stereoscopic-image-forming device 10.

In the operation of the stereoscopic-image-forming device 10, when the lights enter into the transparent plate material 12 from the air and when the lights exit from the transparent plate material 12 into the air, a refraction phenomenon or, according to the circumstances, a total reflection phenomenon of the lights may occur. Therefore, it is necessary to use the stereoscopic-image-forming device 10 while taking in consideration the possibility of occurrence of these phenomena. (It is also the case in embodiments below). Incidentally, the inclined surfaces 14 become light transmissive surfaces as they are.

In the stereoscopic-image-forming device 10, the cross-section of each of the protruded strips and grooves therebetween may be a rectangle or square shape; however, in this case, if the height-to-width ratio (height/width) is equal to or more than 1.5, the production (especially, the demolding) becomes difficult. Since each of the grooves 15 formed between the protruded strips 16 has a triangle-cross-section that width becomes narrower toward the bottom side, the production of the molded preform 22 by injection-molding becomes easier.

Subsequently, a production method for the stereoscopic-image-forming device 10 is explained with reference to Figs. 4A to 4D. Note that since the production methods for the second light control panel 11 and the first light control panel 11 are the same, the production method for the first light control panel 11 is mainly explained.

As shown Fig. 4A, the molded preform 22, where the triangle-cross-section grooves 15 each having the vertical surface 23 and the inclined surface 14 and the protruded strips 16 formed by the grooves 15 next to each other are respectively arranged in parallel on one side (top side) of the transparent plate material 12, is produced by any one of press-molding, injection-molding and roll-molding.

In this case, it is preferred that as the material of the molded preform 22, a thermoplastic resin such as polymethylmethacrylate (acrylic resin), amorphous fluororesin, PMMA, COP, optical polycarbonate, fluorine based polyester, polyether sulfone or the like be used. The dimensions of the molded preform 22 are approximately the same as the dimensions of the light control panel 11. As described above, each of the grooves 15 is tapered so as to widen outwardly; thus, demolding efficiency of the molded preform 22 is excellent and the vertical surfaces can be easily obtained even if they are long. Incidentally, the annealing treatment for removing the residual stress having occurred while molding is applied to the molded preform 22. The annealing treatment is performed by, e.g., placing the molded preform 22 in an electric furnace, a hot air dryer or a hot water bath (heated solvent) for a predetermined time length (It is also the case in embodiments below; hereinbefore: a first step).

Next, the mirror surfaces (the vertical light-reflective surfaces 13) are selectively formed only on the vertical surfaces 23 by a method shown in Fig. 4B, e.g., by sputtering. The sputtering is a technology in which an inert gas (mainly argon) is introduced in a vacuum, a negative voltage is applied to a target to cause a glow discharge, the inert gas atoms are ionized (or, in a non-ionized atomic state), the gas ions are bombarded to the surface of the target at a high speed, metal particles of film forming material constituting the target (e.g. aluminum, silver, nickel, or else) are ejected, and the ejected metal particles are adhered and deposited with sufficient momentum onto a substrate (in this case, the vertical surfaces 23). When the sputtering (including the metal microparticle spraying) is performed toward the vertical surfaces 23 in a manner where the gas flow 29 is along the inclined surfaces 14 and the inclined surfaces 14 become in shadow, the film forming material is unlikely to adhere onto the inclined surfaces 14, and thus, the film forming material is adhered only onto the vertical surfaces 23. The smaller the angle Θ1 of the inclined surfaces 14 is, the more excellent the selective adherence efficiency becomes. Also, the selective adherence efficiency becomes even more excellent if adopting the concave surfaces 24 or 25 shown in Figs. 3B and 3C. The metal reflective films (metal coatings) 28 are formed on the surfaces of the vertical surfaces 23 as described above, thereby the vertical surfaces 23 become the vertical light-reflective surfaces 13, and the molded preform becomes an intermediate preform 30. Incidentally, forming the protruded strips having the concave surfaces is easy.

As other ways to selectively form the mirror surfaces on the vertical surfaces 23, there are a way of performing the metal deposition (PVD or CVD) only to the vertical surfaces 23 after masking all the inclined surfaces 14, and a way of accelerating the metal particles using magnetic field in the metal deposition. There is also a way where, firstly, a film coating treatment that can be removed in a post-process is applied only to the inclined surfaces 14, secondly, any one of the metal deposition, sputtering, metal microparticle spraying, or ion beam irradiation is performed to the vertical surfaces 23 and the surface of the coated film, and then the coated film is removed to expose the transparent inclined surfaces 14. Incidentally, as the coating film, it can be selected from coating films that are removable (i) by chemicals (solvents), (ii) by ultraviolet irradiation from the back side, or (iii) by heating up to a temperature with which the molded preform does not deform (Hereinbefore: a second step).

Subsequently, as shown in Fig. 4C, in a state of vacuum the transparent resin 17 is filled up into the grooves 15 of the intermediate preform 30, and a flattening treatment to the filled surface 18 is applied to form a surface (a top surface) 31. As the transparent resin 17 put in the grooves 15 in this case, it is preferable that a transparent resin that is the same as the material of the molded preform 22 or a transparent resin having a refractive index close to that of the molded preform 22 be used. The position of the surface 31 may be matched the level of the micro flat portions 21. The first light control panel 11 is thereby completed. Incidentally, the second light control panel 11 is produced with the same configuration and steps as the first light control panel 11.

After that, as shown in Fig. 4D, the respective surfaces 31 of the first and second light control panels 11 are bonded together (overlapped each other) in vacuum in a manner where the respective sides (the one sides, the front sides), on which the protruded strips 16 are formed, of the first and second light control panels 11 face to each other and abut on or proximate to each other such that the respective light-reflective surfaces 13 of the first and second light control panels 11 are orthogonally crossed or crossed (e.g. within a range of 88 to 92 degrees) in a plan view. The distance C between the micro flat surfaces 21 on the protruded strips 16 of the first light control panel 11 and the micro flat surfaces 21 on the protruded strips 16 of the second light control panel 11 is, e.g., exceeding 0, and equal to or less than 5 mm, approximately. The stereoscopic-image-forming device 10 is thereby completed. Note that, the first and second light control panels 11 are bonded together in a manner where the respective sides on which the protruded strips 16 are provided abut on or proximate to each other; however, the stereoscopic-image-forming device may be configured by making the respective transparent plate materials 12 (the back sides) abut on each other, or by making the side on which the protruded strip 16 are provided of the first light control panel 11 and the transparent plate material 12 of the second light control panel 11 (or vice versa) abut on each other (hereinbefore: a third step).

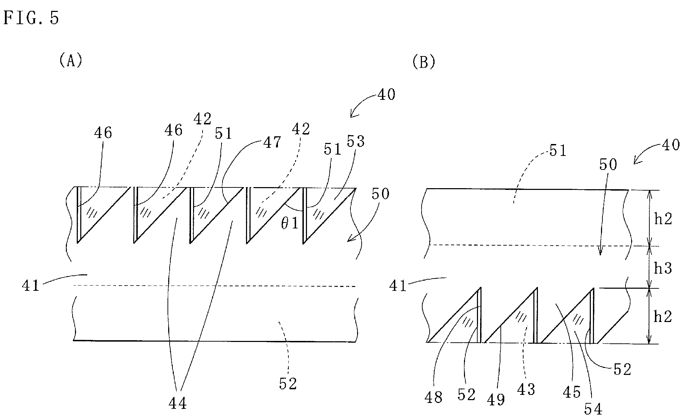

Next, with reference to Figs. 5A and 5B, a stereoscopic-image-forming device 40 and a production method for the same according to the present invention will be explained below. In the case of the stereoscopic-image-forming device 10 according to Fig. 1, the first and second light control panels 11 are separately produced and overlapped each other to form the stereoscopic-image-forming device 10. However, in the case of the stereoscopic-image-forming device 40, grooves 42, 43 and protruded strips 44, 45 formed on the front and back surfaces (both surfaces) of a transparent plate material 41 are integrally formed by dies.

In the stereoscopic-image-forming device 40, triangle-cross-section grooves 42 (first grooves) each having a vertical surface 46 and an inclined surface 47 and triangle-cross-section protruded strips 44 (first protruded strips) formed by the grooves 42 next to each other are respectively arranged in parallel on one side of the transparent plate material (having a thickness h3) 41 positioned in the middle. Additionally, triangle-cross-section grooves 43 (second grooves) each having a vertical surface 48 and an inclined surface 49 and triangle-cross-section protruded strips 45 (second protruded strips) formed by the grooves 43 next to each other are respectively arranged in parallel on the other side of the transparent plate material 41. A molded preform 50 is produced by any one of press-molding, injection-molding and roll-molding such that the grooves 42 formed on one side of the transparent plate material 41 and the grooves 43 formed on the other side of the transparent plate material 41 are orthogonally crossed or crossed in a plan view with an angle of e.g. 85 to 95 degrees, preferably 88 to 92 degrees. The molded preform 50 is made from a transparent resin (first transparent resin) as same as the molded preform 22.

At the bottom portions (corner portions) of the triangle-cross-section grooves 42, 43 and at the top portions (corner portions) of the protruded strips 44, 45, micro flat portions (not shown in Figs.) are provided as same as the above-described stereoscopic-image-forming device 10. The material, production method, and specifications (dimensions h2 and Θ1) of the molded preform 50 are the same as those of the stereoscopic-image-forming device 10. However, in this embodiment the thickness (h3) of the transparent plate material 41 is twice the thickness (h1) of the transparent plate material 12 (hereinbefore: a first step).

Subsequently, vertical light-reflective surfaces 51, 52 that are the mirror surfaces are selectively formed by performing the mirror surface treatment only to vertical surfaces 46 of the grooves 42 and vertical surfaces 48 of the grooves 43 respectively provided on the both sides of the transparent plate material 41, as mentioned above, by metal deposition, sputtering, or according to the circumstances, spraying metal microparticles or ion beam irradiation (an intermediate molded preform, hereinbefore: a second step). The stereoscopic-image-forming device 40 in a state of a flat plate having the first and second light control panels which exposed surfaces are flat surfaces formed on the front and back sides thereof is made by filling up the grooves 42, 43 of the intermediate molded preform with a transparent resin 53, 54 (the second transparent resin) and applying the flattening treatment to the filled surfaces (hereinbefore: a third step).

As the mirror surface treatment to form the mirror surfaces only on the vertical surfaces 46 of the grooves 42 and the vertical surfaces 48 of the grooves 43, there are a way of sequentially or simultaneously performing the metal deposition or the sputtering to the front and back surfaces of the molded preform 50 and other ways.

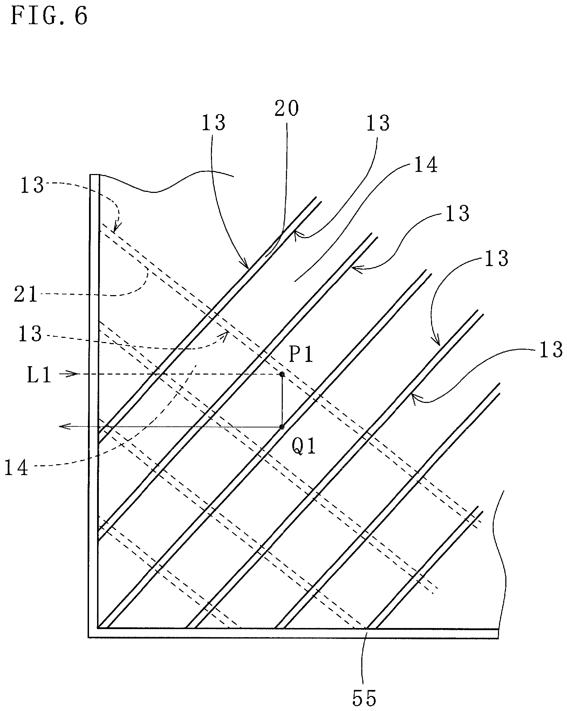

In Fig. 6 that shows the stereoscopic-image-forming device 10 in a plan view (the stereoscopic-image-forming device 40 is also the same), the vertical light-reflective surfaces 13 are arranged with an angle of 40 to 50 degrees in a plan view with respect to an outer frame 55 having a shape of a rectangle or a square. Thereby, it is possible to form a bigger stereoscopic image by effectively utilizing the small-sized stereoscopic-image-forming device since the stereoscopic image is formed via the upper and lower vertical light-reflective surfaces 13 arranged being orthogonally crossed or crossed in a plan view.

The present invention is not limited to the above-mentioned embodiments, and the present invention is applied also in the cases where the elements of or the production methods for the stereoscopic-image-forming device according to each of the embodiments are combined to configure or produce a stereoscopic-image-forming device. Note that in the embodiments above, the vertical light-reflective surfaces (mirror surfaces) are formed on the both sides of each of the metal coatings.

In the present invention explained above, the flattening treatment includes the cases of forming by cutting or polishing as well as pushing by presses or else and molding by dies.

### Industrial Applicability

The production method for a stereoscopic-image-forming device and the stereoscopic-image-forming device according to the present invention enable a stereoscopic-image-forming device which aspect ratio is relatively high to be easily and inexpensively produced. Therefore, the stereoscopic-image-forming device can be effectively utilized for appliances that require an image (e.g. medical appliances, home appliances, motor vehicles, aircrafts, vessels, or else).

### Reference Signs List

10: stereoscopic-image-forming device, 11: first light control panel, second light control panel, 12: transparent plate material, 13: vertical light-reflective surface, 14: inclined surface, 15: groove, 16: protruded strip, 17: transparent resin, 18: filled surface, 19: surface, 20, 21: micro flat portion, 22: molded preform, 23: vertical surface, 24, 25: concave surface, 26, 27: flat surface, 28: metal reflective film, 29: gas flow, 30: intermediate preform, 31: surface, 40: stereoscopic-image-forming device, 41: transparent plate material, 42, 43: groove, 44, 45: protruded strip, 46: vertical surface, 47: inclined surface, 48: vertical surface, 49: inclined surface, 50: molded preform, 51, 52: vertical light-reflective surface, 53, 54: transparent resin, 55: outer frame

## Claims

1. A production method for a stereoscopic-image-forming device (40) **characterized by** comprising:
a first step of producing a molded preform (50) made from a first transparent resin by injection-molding, the molded preform (50) including triangle-cross-section first and second grooves (42, 43) formed respectively on both sides of a transparent plate material (41), the molded preform (50) including triangle-cross-section first and second protruded strips (44, 45) formed respectively on the both sides of the transparent plate material (41), the first and second grooves (42, 43) each having a vertical surface (46, 48) and an inclined surface (47, 49) with an angle (θ1) therebetween of 15 to 60 degrees, the first protruded strips (44) being formed by the first grooves (42) next to each other, the second protruded strips (45) being formed by the second grooves (43) next to each other, the first and second grooves (42, 43) formed respectively on the both sides of the transparent plate material (41) being arranged so as to be orthogonally crossed in a plan view;
a second step of forming mirror surfaces (51, 52) selectively on the vertical surfaces (46, 48) of the first and second grooves (42, 43) provided on the both sides of the molded preform (50); and
a third step of filling up a second transparent resin (53, 54) into the first and second grooves (42, 43) after performing the second step, and further applying a flattering treatment to the surface of the filled second transparent resin (53, 54),
wherein in the second step the mirror surfaces (51, 52) are formed by sputtering, metal deposition, metal microparticle spraying, or ion beam irradiation toward the vertical surfaces (46, 48) from a direction along the inclined surfaces (47, 49) in a manner where the inclined surfaces (47, 49) become in shadow, and
wherein a refractive index η2 of the second transparent resin (53, 54) is within a range of 0.95 to 1.05 times a refractive index η1 of the first transparent resin.

2. The production method for a stereoscopic-image-forming device according to claim 1, wherein the inclined surfaces (47, 49) are flat surfaces.

3. The production method for a stereoscopic-image-forming device according to claim 1, wherein an annealing treatment for removing residual stress is applied to the molded preform (50) after being formed.

## Patentansprüche

1. Verfahren zur Herstellung einer stereoskopischen Bilderzeugungsvorrichtung (40), **dadurch gekennzeichnet, dass** es aufweist:
einen ersten Schritt einer Herstellung eines geformten Vorformlings (50) aus einem ersten transparenten Harz durch einen Spritzformprozess, wobei der geformte Vorformling (50) erste und zweite Rillen (42, 43) eines dreieckigen Querschnitts aufweist, die jeweils auf der einen bzw. der anderen Seite eines transparenten Plattenmaterials (41) gebildet sind, wobei der geformte Vorformling (50) erste und zweite vorspringende Streifen (44, 45) eines dreieckigen Querschnitts aufweist, die jeweils auf der einen bzw. der anderen Seite des transparenten Plattenmaterials (41) gebildet sind, wobei die ersten und zweiten Rillen (42, 43) jeweils eine vertikale Oberfläche (46, 48) und eine schräge Oberfläche (47, 49) mit einem Winkel (Θ1) dazwischen von 15 bis 60 Grad haben, wobei die ersten vorspringenden Streifen (44) von zueinander benachbarten ersten Rillen (42) gebildet werden, wobei die zweiten vorspringenden Streifen (45) von zueinander benachbarten zweiten Rillen (43) gebildet werden, wobei die ersten und zweiten Rillen (42, 43), die jeweils auf der einen bzw. der anderen Seite des transparenten Plattenmaterials (41) gebildet sind, so angeordnet sind, dass sie sich in einer Aufsicht orthogonal kreuzen;
einen zweiten Schritt eines selektiven Bildens von Spiegeloberflächen (51, 52) auf den vertikalen Oberflächen (46, 48) der ersten und zweiten Rillen (42, 43) auf beiden Seiten des geformten Vorformlings (50); und
einen dritten Schritt eines Einfüllens eines zweiten transparenten Harzes (53, 54) in die ersten und zweiten Rillen (42, 43) nach Durchführen des zweiten Schritts, und ferner eines Anwendens einer Einebnungsbehandlung auf die Oberfläche des eingefüllten zweiten transparenten Harzes (53, 54),
wobei in dem zweiten Schritt die Spiegelflächen (51, 52) gebildet werden durch Sputtern, Metallabscheidung, Sprühen von Metallmikropartikeln oder Bestrahlung mit Ionen aus einer Richtung entlang der schrägen Oberflächen (47, 49) hin zu den vertikalen Oberflächen (46, 48) auf eine Weise, in der die schrägen Oberflächen (47, 49) im Schatten liegen, und
wobei ein Brechungsindex η2 des zweiten transparenten Harzes (53, 54) in einem Bereich vom 0,95-fachen bis zum 1,05-fachen eines Brechungsindexes η1 des ersten transparenten Harzes ist.

2. Verfahren zur Herstellung einer stereoskopischen Bilderzeugungsvorrichtung nach Anspruch 1, wobei die schrägen Oberflächen (47, 49) ebene Oberflächen sind.

3. Verfahren zur Herstellung einer stereoskopischen Bilderzeugungsvorrichtung nach Anspruch 1, wobei auf den geformten Vorformling (50), nachdem er geformt worden ist, eine Wärmebehandlung zur Beseitigung von Restspannungen angewendet wird.

## Revendications

1. Procédé de production pour un dispositif de formation d'images stéréoscopiques (40) **caractérisé en ce qu'**il comprend:
une première étape de production d'une préforme moulée (50) faite d'une première résine transparente par moulage par injection, la préforme moulée (50) incluant des première et deuxième rainures (42, 43) à section transversale triangulaire formées respectivement des deux côtés d'un matériau en plaque transparent (41), la préforme moulée (50) incluant des première et deuxième bandes saillantes (44, 45) à section transversale triangulaire formées respectivement des deux côtés du matériau en plaque transparent (41), les première et deuxième rainures (42, 43) ayant chacune une surface verticale (46, 48) et une surface inclinée (47, 49) avec un angle (θ1) entre elles de 15 à 60 degrés, les premières bandes saillantes (44) étant formées par les premières rainures (42) les unes à côté des autres, les deuxièmes bandes saillantes (45) étant formées par les deuxièmes rainures (43) les unes à côté des autres, les première et deuxième rainures (42, 43) formées respectivement des deux côtés du matériau en plaque transparent (41) étant disposées de manière à être croisées orthogonalement dans une vue en plan;
une deuxième étape de formation de surfaces de miroir (51, 52) sélectivement sur les surfaces verticales (46, 48) des première et deuxième rainures (42, 43) prévues des deux côtés de la préforme moulée (50); et
une troisième étape d'introduction d'une deuxième résine transparente (53, 54) dans les première et deuxième rainures (42, 43) après la réalisation de la deuxième étape, et d'application en outre d'un traitement d'aplatissement à la surface de la deuxième résine transparente (53, 54) introduite,
dans lequel, dans la deuxième étape, les surfaces de miroir (51, 52) sont formées par pulvérisation cathodique, dépôt de métal, pulvérisation de microparticules métalliques ou irradiation par faisceau ionique vers les surfaces verticales (46, 48) à partir d'une direction le long des surfaces inclinées (47, 49) de manière que les surfaces inclinées (47, 49) deviennent dans l'ombre, et
dans lequel un indice de réfraction η2 de la deuxième résine transparente (53, 54) est dans une plage de 0,95 à 1,05 fois un indice de réfraction η1 de la première résine transparente.

2. Procédé de production pour un dispositif de formation d'images stéréoscopiques selon la revendication 1, dans lequel les surfaces inclinées (47, 49) sont des surfaces planes.

3. Procédé de production pour un dispositif de formation d'images stéréoscopiques selon la revendication 1, dans lequel un traitement de recuit pour éliminer les contraintes résiduelles est appliqué à la préforme moulée (50) après sa formation.
